# EUROPEAN PATENT APPLICATION

(11) **EP 4 693 285 A2**
(43) Date of publication of application: **11.02.2026**
(21) Application number: 25223484.4
(22) Date of filing: 02.08.2022
(51) Int. Cl.: G11B 7/1387

(54) **INTERFEROMETRIC SCATTERING MICROSCOPY**

(30) Priority: 02.08.2021 GB 202111102
(62) Divisional of application: 22751799.2
(71) Applicant: Refeyn Ltd, Oxford Business Park Oxford OX4 2HN (GB)
(72) Inventor: LANGHORST, Matthias Karl Franz, Oxford, OX4 2HN (GB); COLE, Daniel Richard, Oxford, OX4 2HN (GB); GRAHAM, David John Lehar, Oxford, OX4 2HN (GB)
(74) Representative: Stratagem IPM Limited

(57) **Abstract**

An interferometric scattering microscope comprising: a solid immersion lens provided in a sample solution comprising an object, wherein an interaction between the object and the surface of the solid immersion lens arises; an illumination source; a detector; and an optical system arranged to direct illuminating light from the illumination source onto the surface of the solid immersion lens, collect output light from the surface of the solid immersion lens and to direct the output light to the detector, is provided.

## Description

### FIELD OF THE INVENTION

The present invention relates to interferometric scattering microscopy (referred to herein as iSCAT), and in particular to a method for measuring a property of an object using iSCAT.

### BACKGROUND TO THE INVENTION

iSCAT has materialized as a powerful approach to both single particle tracking with unique spatiotemporal resolution and label-free sensitivity down to the single molecule level. iSCAT is disclosed, for example in Kukura et al., "High-speed nanoscopic tracking of the position and orientation of a single virus", Nature Methods 2009 6:923- 935, and in Ortega-Arroyo et al. "Interferometric scattering microscopy (iSCAT): new frontiers in ultrafast and ultra-sensitive optical microscopy", Physical Chemistry Chemical Physics 2012 14:15625-15636. Despite considerable potential, widespread application of iSCAT has been limited by the requirement for custom-built microscopes, unconventional cameras and complex sample illumination, limiting the capabilities of iSCAT for the robust and accurate detection, imaging and characterisation of objects as small as single molecules.

One application of iSCAT is in Mass Photometry (MP), in which interferometric light scattering is used to quantify the mass of an object. Typically, MP measurements are taken at a measurement interface within an inverted microscope type geometry. This is accomplished by placing a small amount of an analyte onto the measurement interface. Challenges arise when combining MP with biochemical screening workflows in which large numbers of samples are prepared by robotic processes in multi-well plates, and then read out in plate reader-type instruments. Automation of the MP measurement process can be achieved by replicating each well onto a sample carrier by a robotic pipetting step, and then the sample carrier can interface with the iSCAT microscope. However, this approach has a limited throughput and introduces additional complexity to the overall workflow by requiring an additional robot. A major challenge when considering the cost efficiency of the combination of an automated MP process with biochemical screening, is the large number of sample carriers required to replicate the samples in multi-well plates.

Therefore, there is a requirement to provide an efficient, automated process for measuring samples with an iSCAT microscope, which is compatible with current biochemical workflows, and which can achieve a cost efficiency and simplicity which enables it to be widely implemented. There is a requirement for the process to achieve a high sensitivity and resolution such that it is suitable for use in measurements at the single molecule level, and for use in taking measurements at an interface such as is required for mass photometry measurements.

It is against this background that the present invention has arisen.

### SUMMARY OF THE INVENTION

According to an aspect of the present invention, there is provided a method for measuring a property of an object, the method comprising:
dipping a solid immersion lens into a sample solution comprising the object, such that the object interacts with the surface of the solid immersion lens;
illuminating the surface of the solid immersion lens with an illumination source and detecting the scattered light from the object using an interferometric scattering microscope;
measuring a property of the object using the detected scattered light;
withdrawing the solid immersion lens from the solution; and
subsequently cleaning the solid immersion lens such that the object is removed from the surface of the solid immersion lens.

The interaction between the object and the surface of the lens may be temporary, or it could be a permanent interaction between the object and the surface of the lens. In some embodiments, the interaction may involve the object adsorbing to the surface of the solid immersion lens. In other embodiments, the interaction between the object and the surface of the solid immersion lens may be electrostatic binding interaction, and/or the binding may be formed via by salt bridges. In some embodiments, the interaction may involve hydrophobic interactions between the object and the surface of the solid immersion lens.

According to another aspect of the present invention, there is provided a method for measuring a property of an object, the method comprising:
dipping a solid immersion lens into a sample solution comprising the object, such that the object adsorbs to the surface of the solid immersion lens;
illuminating the surface of the solid immersion lens with an illumination source and detecting the scattered light from the object using an interferometric scattering microscope;
measuring a property of the object using the detected scattered light;
withdrawing the solid immersion lens from the solution; and
subsequently cleaning the solid immersion lens such that the object is removed from the surface of the solid immersion lens.

The method of the present invention is an automated workflow which utilises a solid immersion lens and an iSCAT microscope arranged in a configuration such that the solid immersion lens can be dipped into solutions.

In order to facilitate the dipping of the solid immersion lens, the microscope, such as an iSCAT microscope, is arranged in an upright configuration under which the sample solution and cleaning solutions can be moved. The iSCAT microscope of the present invention is configured such that the solid immersion lens is located above the sample, and can be dipped into solutions from above. Compared to a conventional iSCAT microscope setup in which the sample is located above the objective, the configuration of the present invention is inverted.

Furthermore, the microscope no longer requires the sample to be placed on a surface for detection of the object, since the immersion lens effectively replaces the surface.

Previously, the widespread use of iSCAT microscopes in biochemical workflows has been hindered by the need to directly apply and/or grow a sample on the optical surface of the measurement interface. The method of the present invention enables multi-well plates containing the sample and/or cleaning solutions to be positioned underneath the iSCAT microscope such that the solid immersion lens can be dipped directly into the solutions. The method of the present invention therefore enables measurements to be taken directly in the wells of multi-well plates, and achieves compatibility with standard biochemical workflows. It permits high throughput screening of biological samples, for example.

In some embodiments, once the sample has been added to the well plate, the plate may be maintained with temperature control and/or agitation. In some embodiments, the agitation is stopped for the duration of the measurement.

In some embodiments, the multi-well plate may be moved upwards until the solid immersion lens is dipped into a solution. The fixed focus of the solid immersion lens enables measurements to start immediately, allowing a true at equilibrium measurement. In some embodiments, after the duration of the measurement, the solid immersion lens is withdrawn from the solution as the multi-well plate is lowered. In some embodiments, the duration of the measurement may be 10 seconds to 5 minutes. In some embodiments, the duration of the measurement may be more than 10 seconds, 30 seconds, 1 minute, 2 minutes, 3 minutes or 4 minutes. In some embodiments, the duration of the measurement may be less than 5 minutes, 4 minutes, 3 minutes, 2 minutes, 1 minute or 30 seconds.

The use of a solid immersion lens in the method of the present invention, enables both a high sensitivity and a high refractive index (RI) at the measurement interface to be achieved. The higher numerical aperture of the solid immersion lens compared to conventional lenses facilitates the collection of a larger number of scattered photons, therefore increasing the sensitivity of the method. Additionally, the high refractive index of the solid immersion lens means the method of the present invention is compatible with a wider range of solvents compared to a conventional iSCAT microscope. The high refractive index of the solid immersion lens enables a sufficient refractive index difference to be achieved with even high refractive index solvents. For example, the method of the present invention can be used to measure organic polymers, which tend to be only soluble in solvents of RI 1.4 or higher.

The method of the present invention also facilitates the controlled cleaning of the solid immersion lens such that it can be re-used in subsequent measurements. The cleaning process is carried out without user interaction, which enables the cleaning process to be optimised to ensure the entirety of the object is removed from the surface of the solid immersion lens, without damage to the lens or risk to the user. Enabling effective cleaning of the solid immersion lens prevents the requirement for a disposable solid immersion lens, and ensures the method of the present invention is compatible with high throughput biochemical screening workflows.

In some embodiments, measuring a property of the object may include quantifying the mass of the object. In some embodiments, the method of the present invention may be used to carry out mass photometry, wherein the mass of the object is quantified by interferometric light scattering. In some embodiments, the mass can be quantified with up to 5% mass error.

In some embodiments, measuring a property of the object may include measuring or quantifying a change in the mass of an object.

In some embodiments, cleaning of the solid immersion lens may include dipping the solid immersion lens into at least one cleaning solution. Cleaning of the solid immersion lens such that the object and any sample solution are removed from the surface can be achieved in various ways. The cleaning step is important to enable the same solid immersion lens to be used in subsequent measurements, and to avoid requiring a disposable lens.

In some embodiments the solid immersion lens may be dipped repeatedly into the same or different cleaning fluids to ensure all of the object has been removed from the lens surface. The dipping may or may not be accompanied by agitation of the cleaning fluids.

In some embodiments, the solid immersion lens may be cleaned by successive dipping into ethanol, isopropanol or similar alcohols followed by dipping into water. In some embodiments, a more aggressive cleaning may be required, depending on the object adsorbed on the surface, or interacting with the surface, of the solid immersion lens. In some embodiments, the solid immersion lens may be dipped into acids such as hydrochloric acid and/or sulphuric acid, followed by dipping into water. In some embodiments, dipping the solid immersion lens into an oxidating acid such as sulphuric acid, may also functionalise the surface.

Since the method of the present invention is an automated workflow, the cleaning procedure can make use of aggressive solutions and/or more complex cleaning procedures without a risk to the user. This enables an appropriate cleaning solution to be selected which ensures the complete removal of the object from the solid immersion lens during the cleaning step, whilst preventing damage to the surface of the solid immersion lens. The cleaning step can, therefore, remove even "permanent" interactions between the object and the lens.

In some embodiments, the cleaning solution may be held in a cleaning well. In some embodiments the cleaning well may create a seal with the solid immersion lens. In some embodiments the cleaning well may spray the cleaning solution onto the solid immersion lens.

In some embodiments, the method may further comprise the step of flowing air over the solid immersion lens. In some embodiments, the solid immersion lens may be air-dried following the cleaning step. This prevents any cleaning solution on the solid immersion lens from contaminating the sample solution in subsequent measurements.

In some embodiments, the method may further comprise the step of agitating the cleaning solution. In some embodiments, the method of the present invention may include dipping the solid immersion lens into a cleaning solution, and agitating the cleaning solution using a sonicator bath to facilitate the removal of the object from the surface of the solid immersion lens.

In some embodiments, the method may further comprise the step of applying a plasma to the surface of the solid immersion lens. In some embodiments, plasma can be applied to the surface of the solid immersion lens for example with an environmental pressure plasma torch. In some embodiments, plasma can be applied to the surface of the solid immersion lens as part of the cleaning process to remove the object adsorbed to the surface of the lens. In some embodiments, the plasma may be used to functionalise the surface of the solid immersion lens.

In some embodiments, the solid immersion lens has a diameter of 1 to 5 mm. In some embodiments, the diameter of the solid immersion lens can be more than 1, 1.5, 2 or 2.5 mm. In some embodiments, the diameter of the solid immersion lens can be less than 3, 2.5, 2, or 1.5 mm.

In some embodiments, the solid immersion lens may be mounted in a lens assembly. In some embodiments, the solid immersion lens may be mounted in a lens assembly such that the lens assembly is solvent proof. This can avoid solutions leaking into the lens assembly during the dipping of the solid immersion lens into solutions. Design considerations for solvent proofing can include, but are not limited to, ensuring that the lens assembly overlaps the solid immersion lens, gluing or cementing the solid immersion lens into the assembly.

In some embodiments, the lens assembly has a diameter of 2 to 6 mm. In some embodiments, the diameter of the lens assembly may be more than 2, 3, 4 or 5 mm. In some embodiments, the diameter of the lens assembly may be less than 6, 5, 4 or 3 mm.

In some embodiments, the lens assembly may comprise a collection lens. In some embodiments, a 1 mm diameter solid immersion lens may require a 4 mm diameter collection lens, for example.

In some embodiments, the solid immersion lens may have a length of 6 to 10 mm. In some embodiments the length of the solid immersion lens may be more than 6, 7, 8, or 9 mm. In some embodiments, the length of the solid immersion lens may be less than 10, 9, 8 or 7 mm. The design of the solid immersion lens is important in order for the method of the present invention to be compatible for use in biochemical screening workflows which hold samples in multi-well plates. For example, a 96-well plate has a well diameter of 6.94 mm and a maximum well depth of around 11 mm, depending on the bottom type. Therefore, in some embodiments it can be desirable for the solid immersion lens to have a small diameter cylinder geometry. In some embodiments, the solid immersion lens may be shorter in length than 6 mm. However, a shorter lens may require a greater amount of sample to fill the well, which can be impractical.

In some embodiments, the solid immersion lens may be hemispherical or may be superhemispherical. In some embodiments, the solid immersion lens may be made of a diffractive optical element. In some embodiments, a superhemispherical solid immersion lens may be preferable. A superhemispherical solid immersion lens can increase the numerical aperture of the system by η² (with η refractive index of the solid immersion lens). A higher numerical aperture is beneficial as it can increase the collection of scattered photons and result in an improved sensitivity of the measurement.

In some embodiments, the interferometric microscope may further comprise at least one optical element configured to compensate for aberrations in the solid immersion lens. In some embodiments, solid immersion lenses with a small diameter can exhibit significant deviations from the optimal form. A solid immersion lens with a perfectly spherical surface will have a significant aberration, chromatic and coma off axis. In some embodiments, an optical element compensating for these aberrations can be integrated into the optical path. In some embodiments, the optical element can be a freeform element matching the solid immersion lens or a flexible element such as a high resolution spatial light modulator. In some embodiments, the optical element may include spherical lenses and/or a modified relay lens system. An optical system which can correct the deviations of the small diameter solid immersion lens is advantageous as it enables high resolution images to be captured with a solid immersion lens which can be easily dipped into solutions contained in a well-plate.

In some embodiments, the solid immersion lens material may be diamond, or may be zirconia, or may be sapphire, or may be lithium niobate. In some embodiments, a high refractive index material like diamond (η ^{~} 2.4) may be used. In some embodiments, a diamond superhemispherical solid immersion lens can be followed by an objective lens with a numerical aperture of 0.3. In some embodiments, it may be necessary to use a diamond solid immersion lens with a freeform optical element in a relay lens system. In some embodiments, this may be utilised to overcome irregularity in the solid immersion lens shape as a result of manufacturing issues.

In some embodiments, the solid immersion lens material may be glass. In some embodiments, a high-refractive index glass solid immersion lens may be used with an objective lens with a numerical aperture of 0.5. In some embodiments a hemispherical solid immersion lens may be combined with a collection objective lens with a higher numerical aperture of 0.8+.

In some embodiments, the method may further comprise the step of functionalising the surface of the solid immersion lens. In some embodiments, the surface of the solid immersion lens may be functionalised prior to dipping the solid immersion lens into the sample solution. The functionalisation of the surface of the solid immersion lens can be achieved by incubating the solid immersion lens in an appropriate solution. In some embodiments, it may be desirable to functionalise the surface of the solid immersion lens to achieve analyte specificity.

The interaction between the lens and the object may be due to any kind of interaction, from hydrophobicity to covalent bond formation. The interaction between the lens and the object may be due to ionic/ electrostatic interactions. These interactions are due to the physical characteristics of the object.

A surface of the lens may be functionalised. A surface may be passivated, activated, coated, treated or derivatised. The surface may be a passivated surface. Passivation is the process of treating or coating a surface in order to enhance or reduce the chemical reactivity, thus increasing or decreasing the number of interaction events.

A surface of the lens may be activated, coated, treated and/or derivatised to alter the chemistry of the surface. Functionalisation of a surface may be to permit various interactions, such as chemical interactions (e.g. covalent bonding) or physical interactions (e.g. adsorption). If the surface is coated, derivatised or modified, thin surface alterations may be desirable. Altered surface layers that are too thick can change the light scattering properties of the surface. Alteration of only the outermost few molecular layers (3-10 nm) may be desirable.

Any suitable surface coating may be applied to the lens, in order to change the chemistry of the surface. The surface may be altered to increase hydrophobicity or increase hydrophilicity.

In some embodiments, an ideal solid immersion lens material may show strong, but nonspecific interaction with biomolecules. In some embodiments, the surface of the solid immersion lens can be conditioned by carboxylation and/ or oxidation of the surface. In some embodiments, carboxylation and/ or oxidation of a diamond solid immersion lens can improve the adsorption of analytes, such as proteins. In some embodiments, the surface of the solid immersion lens may be carboxylated and/ or oxidised by dipping into strong acids such as sulphuric acid, hydrochloric acid and/ or nitric acid. The solid immersion lens may also be dipped into sodium hydroxide solution. In some embodiments, the surface of the solid immersion lens may be oxidised by treating the surface with a plasma. In some embodiments, in which repeated measurements are performed with the same solid immersion lens, the functionalisation can be carried out after the cleaning step and prior to dipping the solid immersion lens in the sample solution. This ensures the functionalisation and critical surface properties of the solid immersion lens are maintained.

The sample may be any suitable sample, but preferably contains an object, which is a biomolecule.

The sample is preferably liquid, such as a solution or suspension. The solution or suspension may contain any suitable solvent, particularly water. The sample may contain an organic solvent. In particular, the solvent, solution or suspension may have a higher refractive index than water. An advantage of the present invention is that the use of a lens material such as diamond permits the use of organic solvents and the like.

The sample may be a biological sample, such as a medical or veterinary sample. Such biological sample may be a bodily fluid of any appropriate type, or may be a suspension of a tissue of any appropriate type. The sample may be an environmental sample. Such environmental sample may be a water sample, or a sample taken from an environment and suspended in a solvent. The sample may be an industrial sample, such as a sample from a production process.

If the sample is suspected of being concentrated, it may be appropriately diluted. Dilution may use any appropriate solvent, such as water.

The object may be a biological molecule or a biomolecule, or a chemical molecule.

In some embodiments, the object may be a protein, a peptide, a polypeptide, a lipoprotein, a glycoprotein, a lipid, a carbohydrate, an organic polymer, a protein complex, an antibody or an antibody fragment thereof, an enzyme or it may be a nucleic acid molecule such as DNA, RNA, a polysaccharide, or it may be a virus, or a viral vector such as an adenovirus and/or a lentivirus, a virus-like particle, or a small molecule, an exosome, a vesicle, an assembly complex, a nanoparticle, a compound, an ion or a quantum dot.

In some embodiments, the object may be a single molecule, a macromolecule, a supermolecule, or an association of molecules, macromolecules (such as polymers) and supermolecules. Examples of suitable macromolecules may include, but are not limited to, nucleic acid molecules, either natural nucleic acids such as deoxyribonucleic acid (DNA) or ribonucleic acid (RNA), or artificial nucleic acids such as peptide nucleic acid (PNA), Morpholino and locked nucleic acid (LNA), as well as glycol nucleic acid (GNA) and threose nucleic acid (TNA). Associations of molecules can include assemblies such as virus-like particles where envelope or capsid proteins are associated.

In some embodiments, the object may be multi-molecular complexes comprising agglomerations of components, including proteins, such as monomer, dimer and trimer species, or other higher order agglomerations.

In some embodiments, the illuminating light may be spatially and temporally coherent. In some embodiments, the surface of the solid immersion lens may be illuminated with a laser light source. In some embodiments, a laser light source can achieve widefield illumination in the microscope by focussing of the collimated laser beam into the back focal plane of the imaging objective, implying that it can be efficiently coupled in and out of the microscope while minimally affecting the overall imaging performance.

In some embodiments, the interferometric scattering microscope may further comprise a spatial filter. In some embodiments, the iSCAT microscope may additionally be provided with a spatial filter, and can perform spatial filtering of output light, which comprises both light scattered from a sample location and illuminating light reflected from the sample location, prior to detection of the output light. The spatial filtering passes the reflected illumination light but with a reduction in intensity that is greater within a predetermined numerical aperture than at larger numerical apertures. This enhances the imaging contrast for coherent illumination, particularly for objects that are weak scatterers.

The spatial filter is arranged to pass output light with a reduction in intensity within the predetermined numerical aperture to 10⁻² of the incident intensity or less. Typically, the spatial filter may be arranged to pass output light with a reduction in intensity within the predetermined numerical aperture to 10⁻⁴ of the incident intensity or more, for example in the range from 10⁻² to 10⁻⁴ of the incident intensity. Thus, in order to detect these weakly scattering objects a particular aperture may be used.

The spatial filter selectively reduces the intensity of the illuminating light over scattered light, by taking advantage of the mismatch between the numerical aperture of reflected illuminating light and of light scattered from objects in a sample at the sample location. Thus, the spatial filter takes advantage of the different directionalities of these two sources of light. The reflected illuminating light will typically have a relatively small numerical aperture, whereas sub-diffraction-sized objects near a surface of the sample scatter light preferentially into high numerical apertures. Therefore, the reduction in intensity by the spatial filter at low numerical apertures predominantly affects the illuminating light and has a minimal effect on the scattered light, thereby maximising the imaging contrast.

This effect may be maximised by arranging the spatial filter so that the predetermined numerical aperture is identical or similar to the numerical aperture of the illuminating light reflected from the sample location.

### BRIEF DESCRIPTION OF THE FIGURES

The invention will now be further and more particularly described, by way of example only, and with reference to the accompanying drawings, in which:
Figure 1 is a schematic diagram of an iSCAT microscope;
Figure 2 shows a schematic diagram of an inverted iSCAT microscope comprising a solid immersion lens;
Figure 3A illustrates the microscope setup of Figure 2, positioned above a sample solution in a multi-well plate;
Figure 3B shows the solid immersion lens arranged to be dipped into a sample solution;
Figure 3C illustrates the microscope setup of Figure 2, positioned above a cleaning solution in a multi-well plate;
Figure 3D shows the solid immersion lens arranged to be dipped into a cleaning solution;
Figure 4 shows a schematic lens system;
Figure 5 shows two lenses mounted in a barrel (dipping tip);
Figure 6 illustrates the lens system dipped into a well containing a biological solution; and
Figure 7 shows a hemispherical SIL.

### DETAILED DESCRIPTION OF THE FIGURES

The present invention presents a method for measuring a property of an object using an automated workflow and an inverted interferometric scattering microscope comprising a solid immersion lens. The method of the present invention can be used to measure a property of an object directly in a sample solution, and is compatible with multi-well plates used in standard biochemical screening workflows.

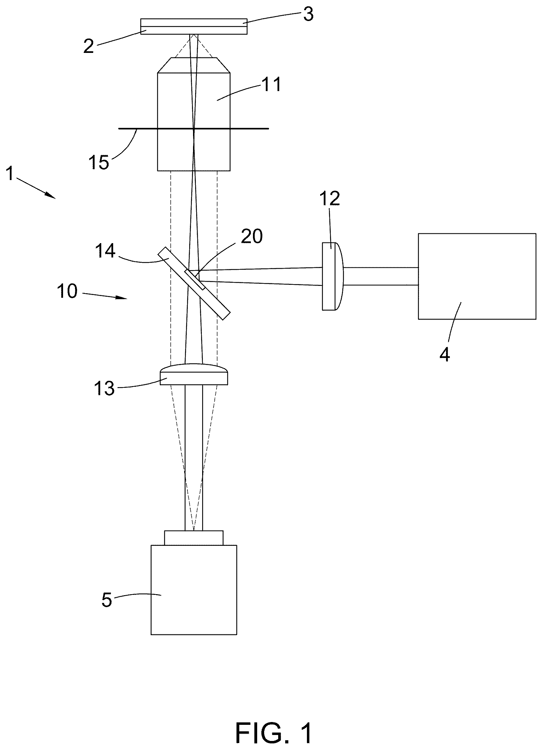

Figure 1 illustrates an iSCAT microscope configuration as disclosed in WO 2018/011591. The disclosure of WO 2018/011591 is incorporated herein by reference, however for completeness the following description will set out the components and functionalities of the iSCAT microscope of the present invention which are in common with those of WO 2018/011591 and which are shown in Figure. 1, then describe the various improvements to said configurations provided by the present disclosure and provide example embodiments thereof.

Figure 1 illustrates an iSCAT microscope **1** which is arranged as follows. The microscope **1** includes the following components that, except for the spatial filter described in more detail below, have a construction that is conventional in the field of microscopy.

The microscope **1** comprises a sample holder **2** for holding a sample **3** at a sample location. The sample **3** may be a liquid sample comprising objects to be imaged, which are described in more detail below. The sample holder **2** may take any form suitable for holding the sample **3.** Typically, the sample holder **2** holds the sample **3** on a surface, which forms an interface between the sample holder **2** and the sample **3.** For example, the sample holder **2** may be a coverslip and/or may be made from glass. The sample **3** may be provided on the sample holder **2** in a straightforward manner, for example using a micropipette.

The microscope **1** further comprises an illumination source **4** and a detector **5.**

The illumination source **4** is arranged to provide illuminating light. The illuminating light may be coherent light. For example, the illumination source **4** may be a laser. The wavelength of the illuminating light may be selected in dependence on the nature of the sample **3** and/or the properties to be examined. In one example, the illuminating light has a wavelength of 405nm.

Optionally, the illumination light may be modulated spatially, to remove speckle patterns that arise from the coherent nature of the illumination and laser noise, for example as detailed in Kukura et al., "High-speed nanoscopic tracking of the position and orientation of a single virus", Nature Methods 2009 6:923-935.

The detector **5** receives output light in reflection from the sample location. Typically, the microscope **1** may operate in a wide-field mode, in which case the detector **5** may be an image sensor that captures an image of the sample **3.** The microscope **1** may alternatively operate in a confocal mode, in which case the detector **5** may be an image sensor or may be a point-like detector, such as a photo-diode, in which case a scanning arrangement may be used to scan a region of the sample **3** to build up an image. Examples of image sensors that may be employed as the detector **5** include a CMOS (complementary metal-oxide semiconductor) image sensor or a CCD (charge-coupled device).

The microscope **1** further comprises an optical system **10** arranged between the sample holder **2,** the illumination source **4** and the detector **5.** The optical system **10** is arranged as follows to direct illuminating light onto the sample location for illuminating the sample **3,** and to collect output light in reflection from the sample location and to direct the output light to the detector **5.**

The optical system **10** includes an objective lens **11** which is a lens system disposed in front of the sample holder **2.** The optical system **10** also includes a condenser lens **12** and a tube lens **13.**

The condenser lens **12** condenses illuminating light from the light source **11** (shown by continuous lines in Figure 1) through the objective lens **11** onto the sample **3** at the sample location.

The objective lens **11** collects the output light which comprises both (a) illuminating light reflected from the sample location (shown by continuous lines in Fig. 1), and (b) light scattered from the sample **3** at the sample location (shown by dotted lines in Fig. 1). The reflected light is predominantly reflected from the interface between the sample holder **2** and the sample **3.** Typically, this is a relatively weak reflection, for example a glass-water reflection. For example, the intensity of the reflected illuminating light may be of the order of 0.5% of the intensity of the incident illuminating light. The scattered light is scattered by objects in the sample **3.**

In a similar manner to conventional iSCAT, scattered light from objects at or close to the surface of the sample constructively interfere with the reflected light and so are visible in the image captured by the detector **5.** This effect differs from a microscope operating in transmission wherein the illuminating light that reaches the detector is transmitted through the depth of the sample leading to a much smaller imaging contrast.

As shown in Figure 1, the reflected illuminating light and the scattered light have different directionalities. In particular, the reflected illuminating light has a numerical aperture resulting from the geometry of the beam of light output by the light source **4** and the optical system **10.** The scattered light is scattered over a large range of angles and so fills larger numerical aperture than the reflected illuminating light.

The tube lens **13** focuses the output light from the objective lens **11** onto the detector **5.**

The optical system **10** also includes a beam splitter **14** that is arranged to split the optical paths for the illuminating light from the light source **4** and the output light directed to the detector **5.** Except for the provision of a spatial filter as described below, the beam splitter **14** may have a conventional construction that provides partial reflection and partial transmission of light incident thereon. For example, the beam splitter **14** may be a plate, typically provided with a film, which may be metallic or dielectric, arranged at 45° to the optical paths. Alternatively, the beam splitter **14** may be a cube beam splitter formed by a matched pair of prisms having a partially reflective film at the interface between the prisms. Alternatively, the beam splitter **14** may be a polarising beam splitter, used in combination with a quarter wave plate between the beam splitter **14** and the sample **3.**

In the example shown in Figure 1, the light source **4** is offset from the optical path of the objective lens **11** so that the illuminating light from the light source **4** is reflected by the beam splitter **14** into the objective lens **11,** and conversely the detector **5** is aligned with the optical path of the objective lens **11** so that the output light from the sample location is transmitted through the beam splitter **14** towards the detector **5.**

In addition to the components described above that may be of a conventional construction, the microscope **1** includes a spatial filter **20.** In the example shown in Figure 1, the spatial filter **20** is formed on the beam splitter **14** and is thereby positioned behind the back aperture of the objective lens **11,** and so directly behind the back focal plane **15** of the objective lens **11.** Thus, the spatial filter **20** may be implemented without entering the objective lens as in phase contrast microscopy. Placing the spatial filter directly behind the entrance aperture of the objective rather than in a conjugate plane (for example as described below) has the distinct advantage of strongly suppressing back reflections originating from the numerous lenses within high numerical aperture microscope objectives. This, in turn, reduces imaging noise, lowers non-interferometric background and reduces the experimental complexity, number of optics and optical pathlength leading to increased stability of the optical setup and thus image quality.

However this location is not essential and a spatial filter having an equivalent function may be provided elsewhere as described below.

The spatial filter **20** is thereby positioned to filter the output light passing to the detector **5.** In the example shown in Figure 1 in which the detector **5** is aligned with the optical path of the objective lens **11,** the spatial filter **20** is therefore transmissive.

The spatial filter **20** is partially transmissive and therefore passes the output light, which includes the reflected illumination light, but with a reduction in intensity. The spatial filter **20** is also aligned with the optical axis and has a predetermined aperture so that it provides a reduction in intensity within a predetermined numerical aperture. Herein, numerical aperture is defined in its normal manner as being a dimensionless quantity characterising a range of angles with respect to the sample location from which the output light originates. Specifically, the numerical aperture NA may be defined by the equation NA= n•sin(θ), where θ is the half angle of collection and n is the refractive index of the material through which the output light passes (for example the material of the components of the optical system **10).**

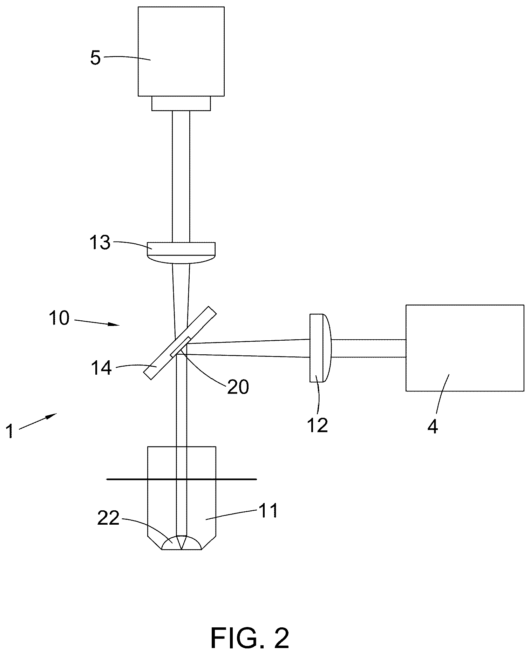

Figure 2 depicts the apparatus shown in Figure 1, in an inverted configuration, and with the sample holder **2** replaced with a solid immersion lens **22.** The microscope configuration is described as inverted, because the detector **5** and illumination source **4** are located above the solid immersion lens **22,** whereas in Figure 1 and for conventional iSCAT microscopes, the detector 5 and the illumination source **4** are located below the sample holder **2.** The inverted microscope configuration enables the solid immersion lens **22** to be easily dipped into solutions from above, as opposed to requiring sample **3** to be placed onto the sample holder **2** as shown in the microscope setup of Figure 1. Compared to conventional lenses, the solid immersion lens **22** can achieve an increased sensitivity and is suitable for use with a wider range of solvents. The solid immersion lens **22** may be glass, diamond, zirconia, sapphire, lithium niobate, or any other suitable material. The solid immersion lens **22** may be hemispherical, superhemispherical or may be a diffractive optical element.

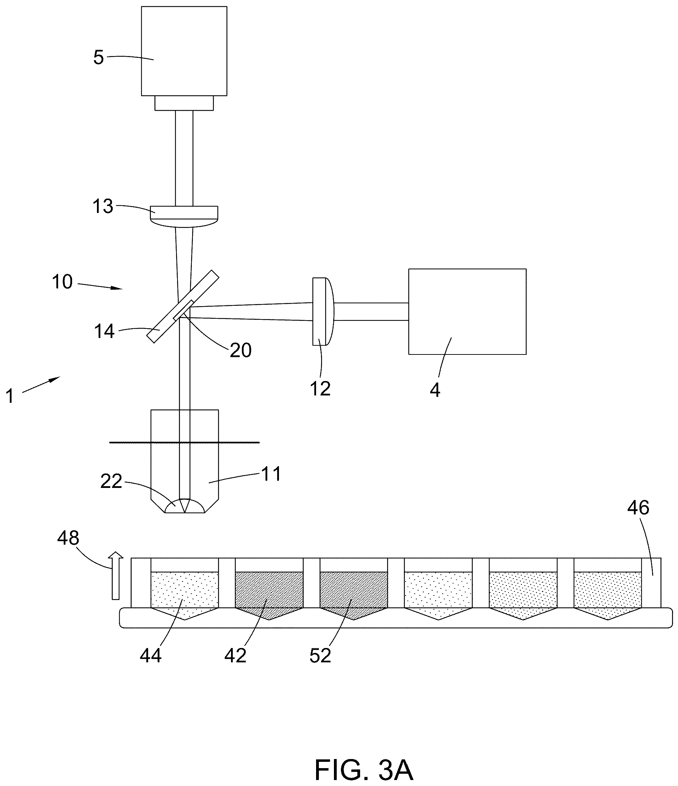

Figures 3A to 3D depict the automated method of the present invention and the inverted microscope setup of Figure 2, being used to measure a property of an object. The object may be a protein, a nucleic acid molecule, a virus-like particle, a single molecule, a macromolecule, a supermolecule, or an association of molecules, macromolecules (such as polymers) and supermolecules.

The inverted microscope geometry and the dipping of the solid immersion enables measurements to be taken directly in sample solutions. The inverted microscope configuration enables solutions to be automatically moved underneath and aligned with the solid immersion lens **22** such that the solid immersion lens can be dipped into the solutions in the required sequence. The method of the present invention is compatible with multi-well plates **46,** and therefore can be integrated into standard biochemical workflows. The multi-well plate **46** illustrated in Figures 3A to 3D depicts 6 wells as an example only, and it should be understood that the method of the present invention is compatible with other well plate formats, including the commonly used 96-well plate format.

Additionally, the method of the present invention also provides a controlled cleaning step, such that the solid immersion lens **22** can be re-used in subsequent measurements. Therefore, the solid immersion lens **22** does not have to be disposed of which keeps the method of the present invention cost effective and suitable for implementing into high throughput workflows.

As shown in Figure 3A, one example embodiment of the present invention shows both sample solution **44** and cleaning solutions **42** and **52** arranged in the same multi-well plate **46.** Alternatively or additionally, some or all of the solutions may be held in separate containers which can be moved under and aligned with the solid immersion lens **22** as required. For example, the multi-well plate **46** may contain only sample solutions **44,** and the one or more cleaning solutions **42** and **52** may be held in separate containers or well plates which can be moved under the solid immersion lens **22** between measurements. The well plate **46** may be maintained with temperature control and/or agitation.

Figure 3A shows the sample solution **44** in the multi-well plate **46** aligned under the solid immersion lens **22.** The sample solution **44** contains the target object of interest. The multi-well plate **46** can be moved up towards the solid immersion lens **22,** as indicated by the arrow **48** shown in Figure 3A.

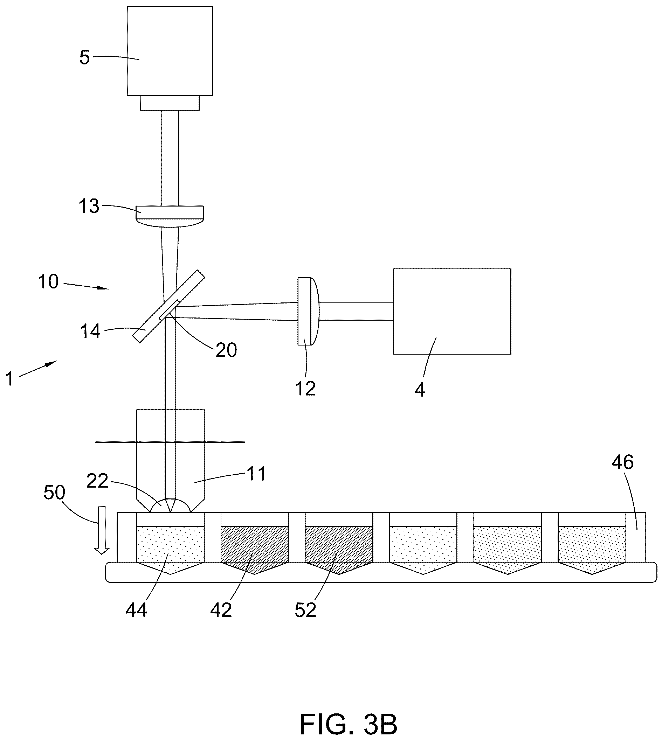

As shown in Figure 3B, the multi-well plate **46** can be moved upwards until the solid immersion lens **22** is dipped into the sample solution **44** comprising the object to be measured. The solid immersion lens **22** is held dipped into the sample solution **44** which enables the object of interest to adsorb to the surface of the solid immersion lens **22.** In order to facilitate the adsorption of the object of interest, the surface of the solid immersion lens **22** may be functionalised prior to dipping into the sample solution **44.** Functionalisation of the lens surface may take place by dipping the solid immersion lens **22** into sodium hydroxide solution, sulphuric acid, hydrochloric acid, and/or nitric acid. Functionalisation of the lens surface may also take place by plasma treatment for example. The surface of the solid immersion lens **22** may be carboxylated and/or oxidated.

The solid immersion lens **22** is held in the sample solution **44** for a predetermined amount of time. During this time, the object of interest adsorbs to the surface of the solid immersion lens **22,** and a measurement is taken using the iSCAT microscope **1.** The surface of the solid immersion lens **22** is illuminated with the illumination source **4** and the scattered light from the object is detected by the detector **5** of the iSCAT microscope **1.** The scattered light is used to measure a property of the object adsorbed to the surface of the solid immersion lens **22.** The duration for which the solid immersion lens **22** is held in the sample solution **44** as shown in Figure 3B can be between 10 seconds and 5 minutes.

After the predetermined time has elapsed, and a measurement of the object has been taken using the iSCAT microscope **1,** the multi-well plate **46** can be lowered, as indicated by the arrow **50** in Figure 3B. The lowering of the multi-well plate **46** is such that the solid immersion lens **22** is withdrawn from the sample solution **44.** At this point, the object of interest remains adsorbed to the surface of the solid immersion lens **22.**

To prevent the solid immersion lens **22** from having to be disposed of, which would significantly increase the cost of the method of the present invention, the present invention incudes a method for cleaning the solid immersion lens **22** after a measurement has been taken, such that the object is removed from the surface of the solid immersion lens **22.**

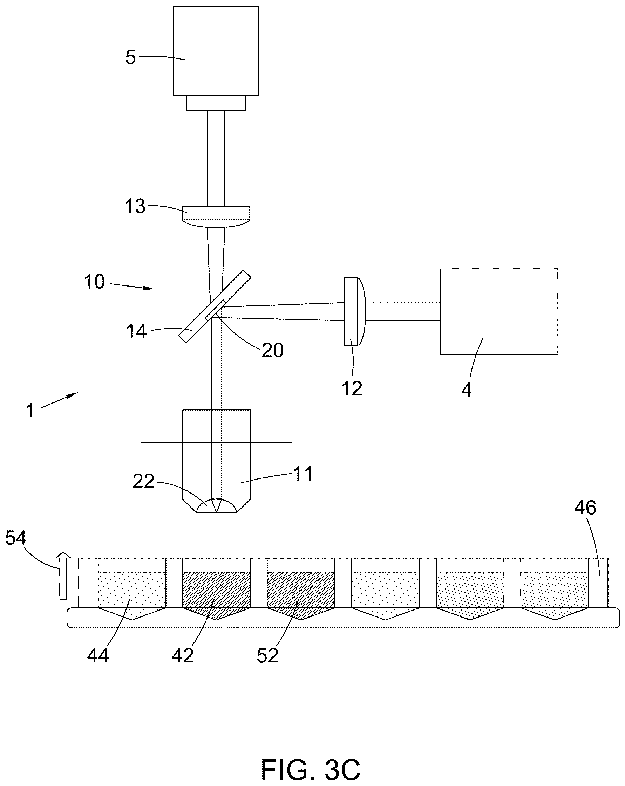

As shown in Figure 3C, the multi-well plate **46** can be automatically moved such that the cleaning solution **42** is positioned underneath and aligned with the solid immersion lens **22.** Alternatively, the cleaning solution **42** may be held in a separate container which can be automatically positioned under the solid immersion lens **22** in between measurements.

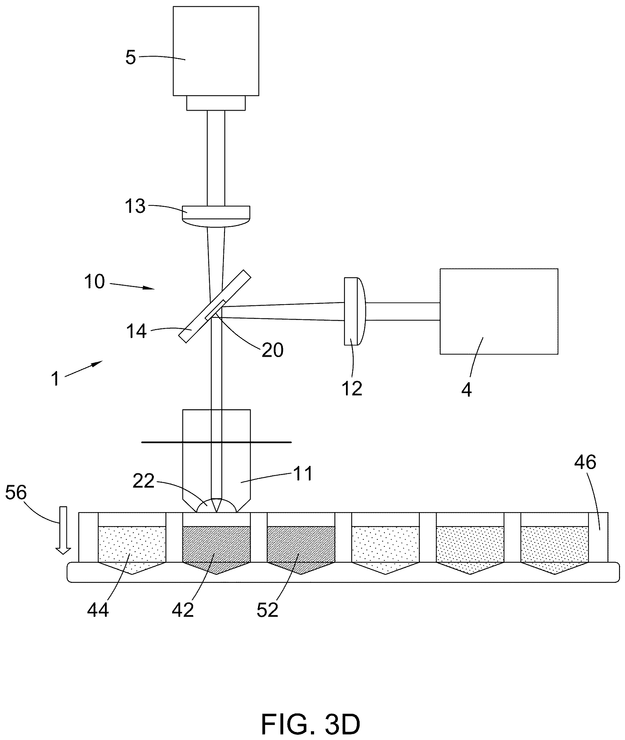

The solid immersion lens **22** may be cleaned as shown in Figure 3C, by moving the multi-well plate **46** upwards, as indicated by the arrow **54.** Figure 3D shows the solid immersion lens **22** dipped into the cleaning solution **42.** After a pre-determined time, the multi-well plate **46** can be lowered, as indicated by the arrow **56,** and the cleaned solid immersion lens **22** can then be dipped into further sample solutions **44** and used in further measurements. Alternatively, after withdrawing the solid immersion lens **22** from the cleaning solution **42,** the solid immersion lens **22** can be subsequently dipped into one or more further cleaning solutions **52.** This enables the cleaning routine to be adapted depending on the sample solution **44** and the object adsorbed onto the surface of the solid immersion lens **22** such that all of the object and sample solution **44** is removed from the solid immersion lens **22** and does not contaminate further measurements. The cleaning solutions **42** and/or **52** may include, but are not limited to, ethanol, isopropanol, water, hydrochloric acid, and/or sulphuric acid. After withdrawal of the solid immersion lens **22** from the cleaning solutions **42** and/or **52,** a flow of air over the lens surface may be used to dry the surface to remove any remaining cleaning solution.

Alternatively or additionally, the cleaning solutions **42** and/or **52** may be agitated for example by a sonicator bath, to aid the removal of the object from the solid immersion lens **22** surface.

Alternatively or additionally, the solid immersion lens **22** may be treated with plasma between measurements to facilitate the cleaning process, for example with an environmental pressure plasma torch. Alternatively or additionally, the solid immersion lens **22** may be treated with plasma after the cleaning process, in order to functionalise the surface of the solid immersion lens **22** and facilitate the adsorption of the target object when the solid immersion lens **22** is dipped into the sample solution **44.**

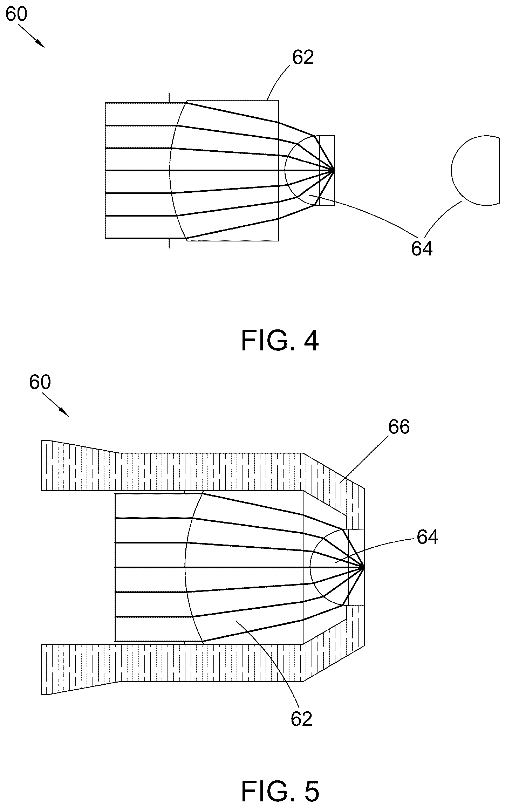

Referring to Figure 4, there is shown a lens system **60** having an aspheric lens **62** that focuses into a super hemispherical solid immersion lens (s-SIL) **64.** In some embodiments, the hemispherical solid immersion lens or and/or a Weierstrass lens can be a sphere shaped, which can then be truncated to a thickness, t = r x (1+1/n), r radius, n refractive index. For this thickness, the lens increases the NA of the input beam by n² without adding spherical aberration. With diamond (n = 2.42) 2.1 NA can be reached with a 0.36 NA aspheric. Alternative materials, high index glass (S-LAH79, n = 2) or cubic zirconia (n = 2.17), can exceed 1.8 NA with a 0.45 NA aspheric.

Referring to Figure 5, the two lenses **62, 64** are be mounted in a barrel **66,** such as a stainless steel barrel, which is small enough that it can be dipped into one or more standard well plates (diameter 6.5 - 7 mm). A 2 mm diameter hemispherical solid immersion **64** is illustrated in Figure 5 but other sizes are possible.

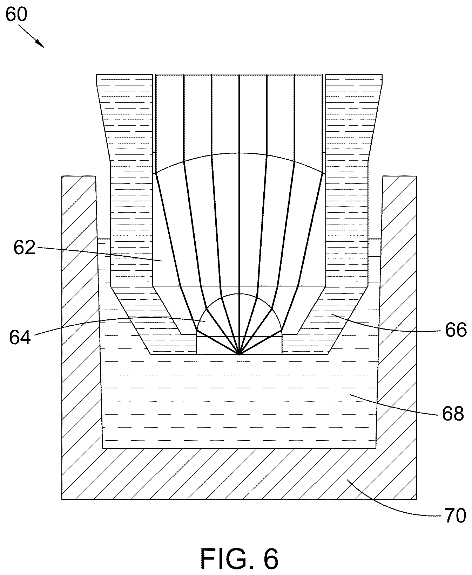

Measurements can be made by dipping the lens **62, 64** into a biological solution **68,** for example a protein solution as shown in Figure 6 contained within a well **70.** The barrel (dipping tip) **66** can be resistant to water, salt solutions, alcohols and other solvents.

The well can be made out of plastic but the well can also be made of other suitable materials known by the skilled person in the art. At least the SIL **64** can then be cleaned by dipping and spraying with aqueous solutions and organic solvents such as isopropanol. Additionally or alternatively, both lenses **62, 64** can be cleaned by dipping and spraying with aqueous solutions and organic solvents such as isopropanol. The lens system therefore needs to be well sealed and chemically resistant. There can be limitations on the materials used for the lens barrel to avoid contaminating the sample solution. Stainless steel 316 can be an option. For diamond bonding, the hemi-spherical lens can be securely mounted so that it can then be integrated with the rest of the optics system. The optic systems, as described herein, can be used with standard oil immersion objectives with a partially transmitting mask to attenuate part of the beam.

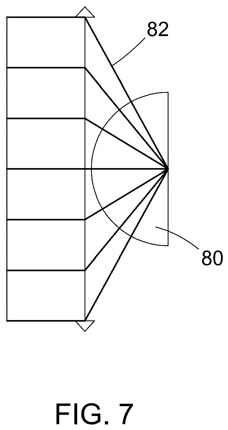

Referring to Figure 7, there are provided alternative design to the solid immersion lens. A hemispherical solid immersion lens **80** can be used but the NA of the input beam **82** is increased by n rather than n². This may require a 0.8+ NA input lens, which seems more likely to be a multi-element system than a single aspheric. A small diameter, 0.5 to 1 mm, SIL may be needed so that the input objective does not need an excessive working distance.

### Examples

### Materials and methods

### Optical

Operating wavelength range can be between 515 - 535 nm. Chromatic aberration may limit the wavelength range for specified performance without refocusing to (0.2 / 5) nm. A good imaging performance can be defined as: Field of view (15 um / 30 um) diameter centred on the optic axis. NA (1.8 / 2.1) for diamond (1.6 / 1.8) for high index glass or cubic zirconia. Diffraction limited imaging over the field of view, Strell ratio > (0.9 / 0.95).

### Other optical properties

To reach the above NA in the s-SIL the NA of the aspheric can be around 0.35. Diameter of 4 mm can be provided to fit in tip. AR coatings can be applied onto the aspheric and/or relay lenses, R < 1%. Low stray light and avoiding reflections sent back along the imaging path. Effective focal length of SIL-aspheric system, to determine magnification, 0.5 to 5 mm. Note the n² magnification of the s-SIL. Low stress birefringence as polarisation can be important.

Laser damage threshold can be provided high enough to allow a 2W beam occupying any 10% of the area of the aspheric lens clear aperture. No cemented interfaces. Additionally or alternatively, the SIL can be made by Asphericon surface roughness of flat surface (2 , < 1) nm RMS.

### Mechanical

The system can be built in a sealed dipping tip 6 mm maximum diameter for a length of 10 mm from the flat surface of the s-SIL. The s-SIL and aspheric lens should be securely mounted in positions to achieve the above optical performance. Thermal expansion of components should not prevent focusing over a temperature range of 20 to 22, 15 to 40 Celsius.

Various further aspects and embodiments of the present invention will be apparent to those skilled in the art in view of the present disclosure.

"and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein.

Unless context dictates otherwise, the descriptions and definitions of the features set out above are not limited to any particular aspect or embodiment of the invention and apply equally to all aspects and embodiments, which are described.

It will further be appreciated by those skilled in the art that although the invention has been described by way of example with reference to several embodiments, it is not limited to the disclosed embodiments and that alternative embodiments could be constructed without departing from the scope of the invention as defined in the appended claims.

## Claims

1. An interferometric scattering microscope comprising:
a solid immersion lens provided in a sample solution comprising an object, wherein an interaction between the object and the surface of the solid immersion lens arises;
an illumination source;
a detector; and
an optical system arranged to direct illuminating light from the illumination source onto the surface of the solid immersion lens, collect output light from the surface of the solid immersion lens and to direct the output light to the detector.

2. The microscope according to claim 1, wherein the solid immersion lens has a diameter of 1 to 5 mm.

3. The microscope according to any of the preceding claims, wherein the solid immersion lens is mounted in a lens assembly.

4. The microscope according to any of the preceding claims, wherein the lens assembly has a diameter of 2 to 6 mm.

5. The microscope according to any of the preceding claims, wherein the solid immersion lens has a length of 6 to 10 mm.

6. The microscope according to any of the preceding claims, wherein the solid immersion lens is hemispherical or is superhemispherical.

7. The microscope according to any of the preceding claims, wherein the interferometric microscope further comprises at least one optical element configured to compensate for aberrations in the solid immersion lens.

8. The microscope according to claim 7, wherein the optical element includes one or more of: a freeform element, a flexible element, a spherical lens and/or a modified relay lens system.

9. The microscope according to any of the preceding claims, wherein the solid immersion lens material is diamond, or is zirconia, or is sapphire, or is lithium niobate.

10. The microscope according to any one of claims 1 to 8, wherein the solid immersion lens material is glass.

11. The microscope according to any of the preceding claims, wherein the interferometric scattering microscope further comprises a spatial filter.

12. The microscope according to any of the preceding claims, wherein the surface of the solid immersion lens is functionalised, passivated, activated, coated, treated and/or derivatised.
